# EUROPEAN PATENT APPLICATION

(11) **EP 4 542 508 A1**
(43) Date of publication of application: **23.04.2025**
(21) Application number: 24207204.9
(22) Date of filing: 17.10.2024
(51) Int. Cl.: G06V 10/82, G06V 30/14, G06V 30/422, G06V 10/22

(54) **WELL LOG CURVE DIGITIZATION**

(30) Priority: 17.10.2023 US 202318488174
(71) Applicant: Services Pétroliers Schlumberger, 75007 Paris (FR); GeoQuest Systems B.V., 2514 JG The Hague (NL)
(72) Inventor: SHAKEEL, Mohd Saood, 411006 Pune (IN)
(74) Representative: Schlumberger Intellectual Property Department

(57) **Abstract**

Techniques for digitizing a well log are presented. The techniques include: obtaining a scan of a well log curve paper document; passing the scan of the well log curve paper document to a trained segmentation neural network, such that a curve mask is obtained; passing the curve mask to a trained digitization neural network, such that a digitization of the curve mask is obtained; and outputting the digitization of the curve mask.

## Description

### Field

This disclosure relates generally to well log data.

### Background

Drilling wells for petroleum generally involves gathering many types of data. Such data may include well logs, which may take the form of graphs that associate well depth (as an independent variable) with one or more properties (as dependent variable(s)). Thus, a well log graph may include one or more curves representing properties such as temperature, tension, spontaneous potential, gamma rays, resistivity, porosity, density, etc. as functions of depth. Further, such graphs may include grid lines, hash marks, annotations, or other indicia.

People have been drilling wells since before the advent of the modern computer. Many well logs for older wells exist only in paper form.

### Summary

According to various embodiments, a machine learning method of digitizing a well log curve is presented. The method includes: obtaining a scan of a well log curve paper document; providing the scan of the well log curve paper document to a trained segmentation neural network, where a curve mask is obtained; providing the curve mask to a trained digitization neural network, where a digitization of the curve mask is obtained; and outputting the digitization of the curve mask.

Various optional features of the above embodiments include the following. The outputting may include outputting to a drilling process. The method may further include performing a drilling operation based on the digitization of the curve mask. At least one of the trained segmentation neural network or the trained digitization neural network may be trained using synthetic training data, where the synthetic training data is generated from numerical coordinate data. The trained segmentation neural network may be trained using the synthetic training data, each synthetic training datum may include a respective pair, each respective pair may include an image of a respective curve generated from respective numerical coordinate data and the image of the respective curve generated from respective numerical coordinate data combined with a respective grid depiction, and the trained segmentation neural network may be trained to remove a grid from the scan of the well log curve paper document. The trained digitization neural network may be trained using the synthetic training data, each synthetic training datum may include a respective pair, and each respective pair includes a section of an image of a respective curve generated from respective numerical coordinate data and a corresponding respective numerical position value. Both of the trained segmentation neural network and the trained digitization neural network may be trained using the synthetic training data. The scan of the well log curve paper document may include a plurality of different curves, and the trained segmentation neural network may be trained to produce the curve mask for a selected line style. The method may further include annotating the scan of the well log curve paper document with the selected line style prior to the providing the scan of the well log curve paper document to the trained segmentation neural network. The providing the scan of the well log curve paper document to the trained segmentation neural network may include dividing the scan of the well log curve paper document into a plurality of scan tiles and providing the scan tiles individually to the trained segmentation neural network, where the curve mask includes a plurality of curve mask tiles, and the providing the curve mask to the trained digitization neural network may include providing the curve mask tiles individually to the trained digitization neural network, where the digitization of the curve mask includes a plurality of digitizations of the curve mask tiles.

According to various embodiments, a non-transitory computer-readable medium including instructions that, when executed by an electronic processor, configure the electronic processor to digitize a well log curve by performing actions is presented. The actions include: obtaining a scan of a well log curve paper document; passing the scan of the well log curve paper document to a trained segmentation neural network, where a curve mask is obtained; passing the curve mask to a trained digitization neural network, where a digitization of the curve mask is obtained; and outputting the digitization of the curve mask.

Various optional features of the above embodiments include the following. The outputting may include outputting to a drilling process. At least one of the trained segmentation neural network or the trained digitization neural network may be trained using synthetic training data, where the synthetic training data is generated from numerical coordinate data. The trained segmentation neural network may be trained using the synthetic training data, each synthetic training datum may include a respective pair, each respective pair may include an image of a respective curve generated from respective numerical coordinate data and the image of the respective curve generated from respective numerical coordinate data combined with a respective grid depiction, and the trained segmentation neural network may be trained to remove a grid from the scan of the well log curve paper document. The trained digitization neural network may be trained using the synthetic training data, each synthetic training datum may include a respective pair, and each respective pair may include a section of an image of a respective curve generated from respective numerical coordinate data and a corresponding respective numerical position value. Both of the trained segmentation neural network and the trained digitization neural network may be trained using the synthetic training data. The scan of the well log curve paper document may include a plurality of different curves, and the trained segmentation neural network may be trained to produce the curve mask for a selected line style. The operations may further include annotating the scan of the well log curve paper document with the selected line style prior to the providing the scan of the well log curve paper document to the trained segmentation neural network. The providing the scan of the well log curve paper document to the trained segmentation neural network may include dividing the scan of the well log curve paper document into a plurality of scan tiles and providing the scan tiles individually to the trained segmentation neural network, where the curve mask includes a plurality of curve mask tiles, and the providing the curve mask to the trained digitization neural network may include providing the curve mask tiles individually to the trained digitization neural network, where the digitization of the curve mask includes a plurality of digitizations of the curve mask tiles.

According to various embodiments, a system including an electronic processor and a non-transitory computer-readable medium including instructions that, when executed by the electronic processor, configure the electronic processor to digitize a well log curve by performing actions is presented. The actions include: obtaining a scan of a well log curve paper document; passing the scan of the well log curve paper document to a trained segmentation neural network, where a curve mask is obtained; passing the curve mask to a trained digitization neural network, where a digitization of the curve mask is obtained; and outputting the digitization of the curve mask.

Combinations, (including multiple dependent combinations) of the above-described elements and those within the specification have been contemplated by the inventors and may be made, except where otherwise indicated or where contradictory.

### Brief Description of the Drawings

Various features of the examples can be more fully appreciated, as the same become better understood with reference to the following detailed description of the examples when considered in connection with the accompanying figures, in which:
Fig. 1 is a high-level diagram that schematically illustrates digitizing a well log curve according to various embodiments;
Fig. 2 illustrates an example well log graph with a log header according to various embodiments;
Fig. 3 schematically illustrates generating a synthetic well log graph for machine learning training according to various embodiments;
Fig. 4 schematically illustrates preprocessing, for machine learning training, a synthetic well log graph by annotating it with a line style according to various embodiments;
Fig. 5 illustrates a synthetic machine learning training datum pair that includes curves and combined curves and grid lines according to various embodiments;
Fig. 6 schematically illustrates training a machine learning digitization system to digitize a curve mask according to various embodiments;
Fig. 7 schematically illustrates training a machine learning system to digitize a well log curve according to various embodiments;
Fig. 8 schematically illustrates using a trained machine learning system to digitize a well log curve according to various embodiments;
Fig. 9 is a flow diagram for a machine learning method of digitizing a well log curve according to various embodiments.

### Description of the Examples

Reference will now be made in detail to example implementations, illustrated in the accompanying drawings. Wherever convenient, the same reference numbers will be used throughout the drawings to refer to the same or like parts. In the following description, reference is made to the accompanying drawings that form a part thereof, and in which is shown by way of illustration specific exemplary examples in which the invention may be practiced. These examples are described in sufficient detail to enable those skilled in the art to practice the invention and it is to be understood that other examples may be utilized and that changes may be made without departing from the scope of the invention. The following description is, therefore, merely exemplary.

Various embodiments use machine learning to digitize a curve in a paper well log graph. In more detail, various embodiments may accept a scanned paper well log graph, use machine learning to isolate a selected curve from the graph and produce a curve mask, and use machine learning to generate a digitization of the curve mask. Various embodiments may remove a grid or other background indicia from the scanned well log graph in order to isolate the selected curve. The digitization of the curve mask may take the form of an electronic file that contains coordinates from the curve, e.g., in .csv of .las format.

These and other features and advantages are shown and described in detail herein, in reference to the figures.

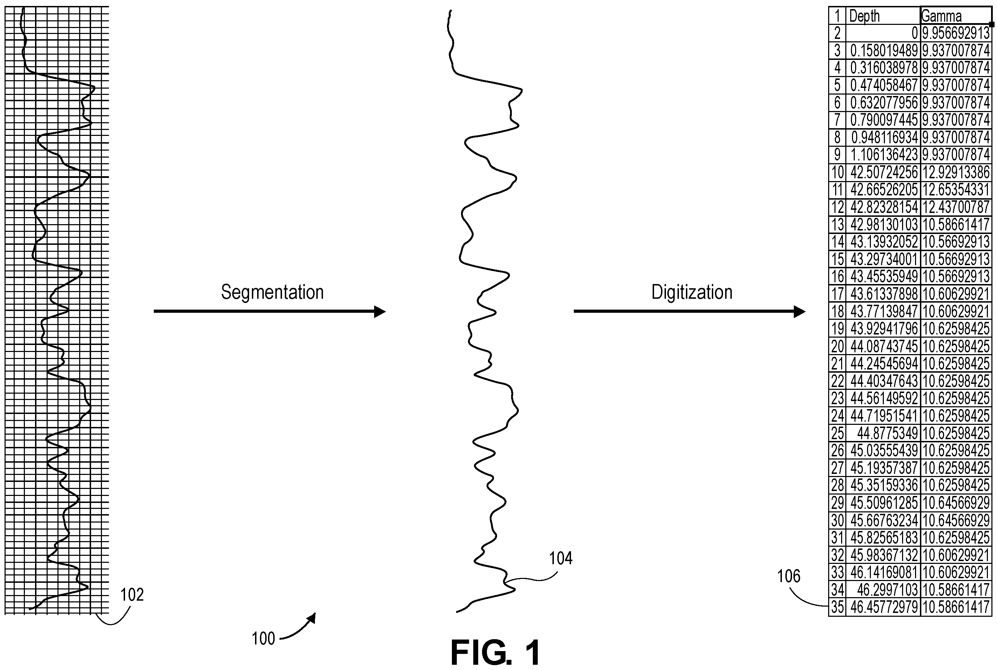

Fig. 1 is a high-level diagram 100 that schematically illustrates digitizing a well log curve according to various embodiments. As shown in Fig. 1, a scan 102 of a well log graph is obtained, e.g., by scanning a paper well log graph using an optical scanner. The can 102 is segmented using machine learning to obtain an isolated curve 104. The isolated curve 104 may be in the form of a curve mask, e.g., an image file that has a first value (e.g., 1) for pixels that are deemed to be on the curve and a second value (e.g., 0) for pixels that are deemed to not be on the curve. The isolated curve 104 is then digitized using machine learning to obtain a digitization 106 of the curve. The digitization 106 may be in the form of coordinate pairs (x, y) in a comma separated value (.csv) or LASer (.las) file, by way of non-limiting examples.

The scan 102 includes a single curve. However, a typical scan of a well log graph can include multiple curves drawn in distinct line styles in order to distinguish between the individual curves. Such distinct line styles may include various forms of dashing (e.g., solid, dashed, dotted, dash-dotted, etc.) or various colors (e.g., red, green, blue, etc.). The information identifying the interpretation of the individual curves according to their line style is usually given in log header directly above the plot segment.

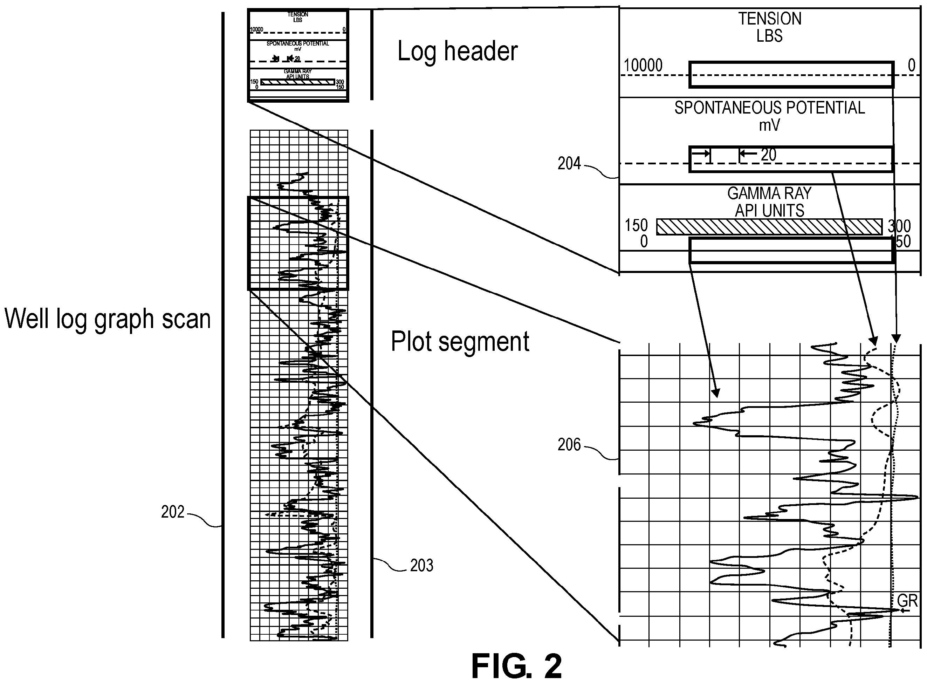

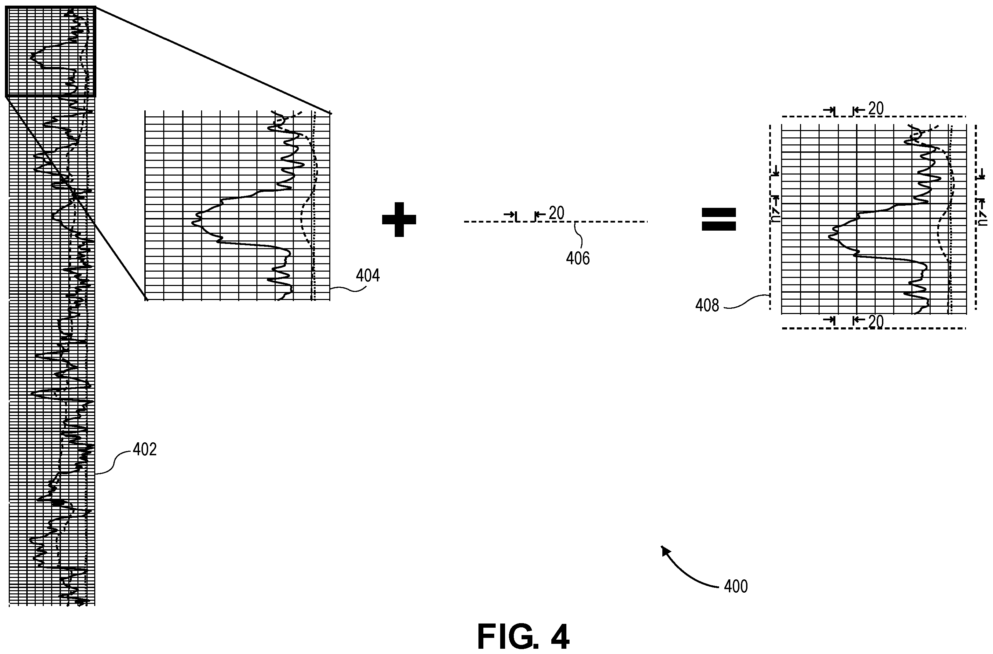

Fig. 2 illustrates an example well log graph 202 with a log header 204 according to various embodiments. The well log graph 202 includes a plot segment 203, of which a square plot segment tile 206 is called out in Fig. 2. Various embodiments may utilize such square plot segment tiles as described herein in reference to Fig. 4, for example. Note that the plot segment 203 further includes a grid to provide a measurement calibration. The plot segment 203 of the log graph 202 includes three curves, each with a distinct line style: a dotted line style representing tension in lbs., a dashed line style representing spontaneous potential in mv, and a solid line style representing gamma rays in API units. Above the plot portion of the log graph 202, the log header 204 includes a key that illustrates each line style and notes their respective representations. Further, the log header 204 shows the scale and range for each depicted property and corresponding line style.

Various embodiments use machine learning to take the plot segment, along with the line style from the log header, and extract the corresponding curve into digital format. The process of preparing a machine learning system to accomplish this task can be conceptualized as including the following three operations, which are summarized below and elaborated upon in the present specification in reference to the figures.

### (1) Generating synthetic training data

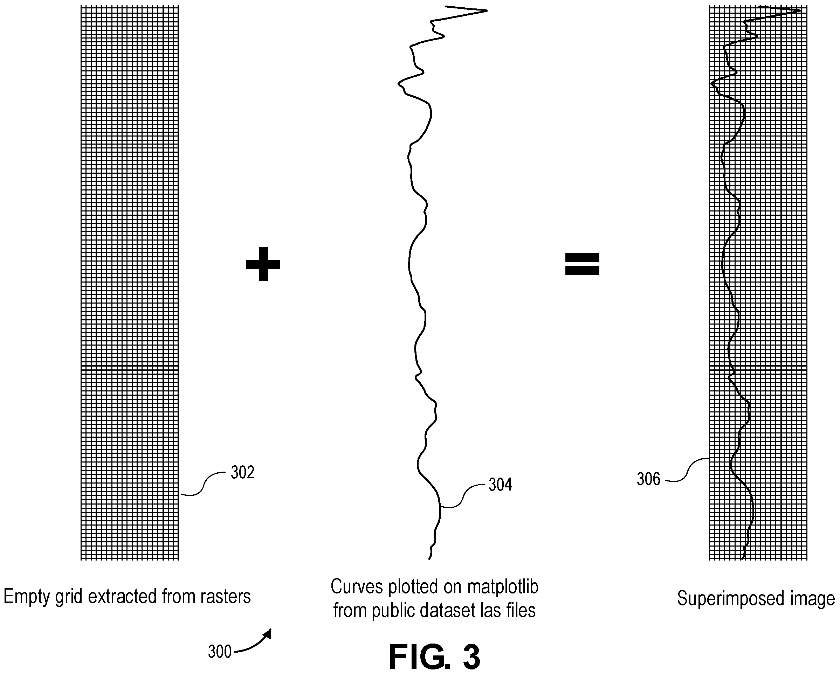

Some embodiments use machine learning to segment and digitize well log graphs. Such machine learning may be trained using synthetic training data as described in detail herein. In order to generate the synthetic training data, which includes synthetic well log graphs that are very similar to real well log graphs, some embodiments use publicly available .las files and superimpose the curves represented by them onto empty grid lines. The grid lines may be obtained by scanning existing paper well logs, for example. Generating synthetic training data eliminates the need to manually hand-label well log graph scans. (This process is described in detail in reference to Fig. 3, for example.)

### (2) Preprocessing the synthetic training data

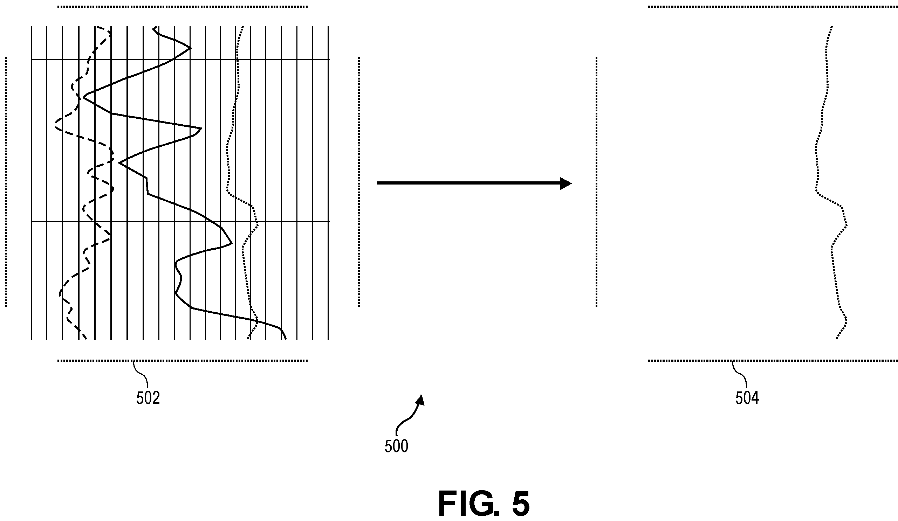

Once the synthetic training data is generated, some embodiments preprocess it before using it to train the machine learning system. For example, some embodiments divide the entire plot segment of a synthetic generated log graph into square tiles, with side length equal to the width of the plot segment, and then annotate each tile on all four sides with a selected line style that is to be isolated. (This process, which allows for isolating curves with any line style, is described in detail in reference to Figs. 4 and 5, for example.)

### (3) Training the machine learning system

Some embodiments include two machine learning systems: a machine learning segmentation system that segments a scanned well log graph to isolate a selected curve and generate a corresponding curve mask, and a machine learning digitization system that digitizes the curve mask. The machine learning segmentation system may be constructed using Segformer, by way of non-limiting example.

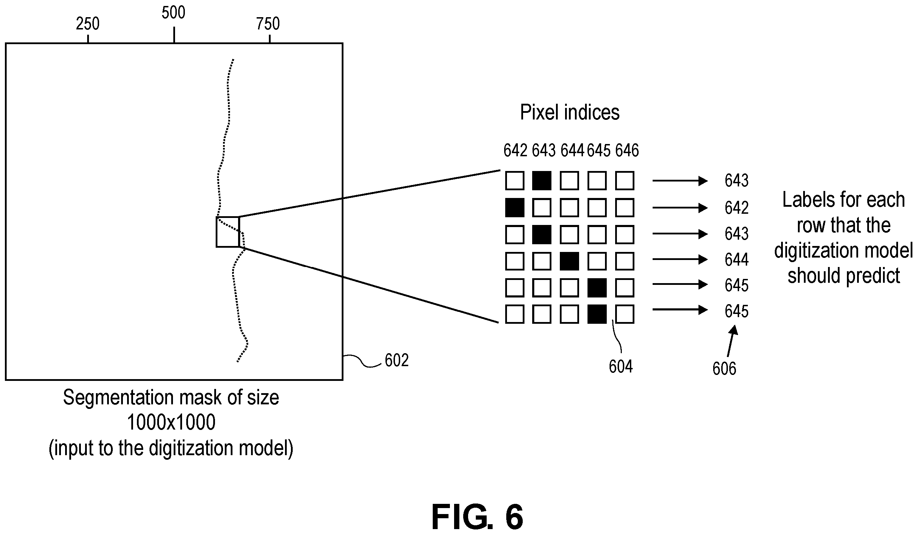

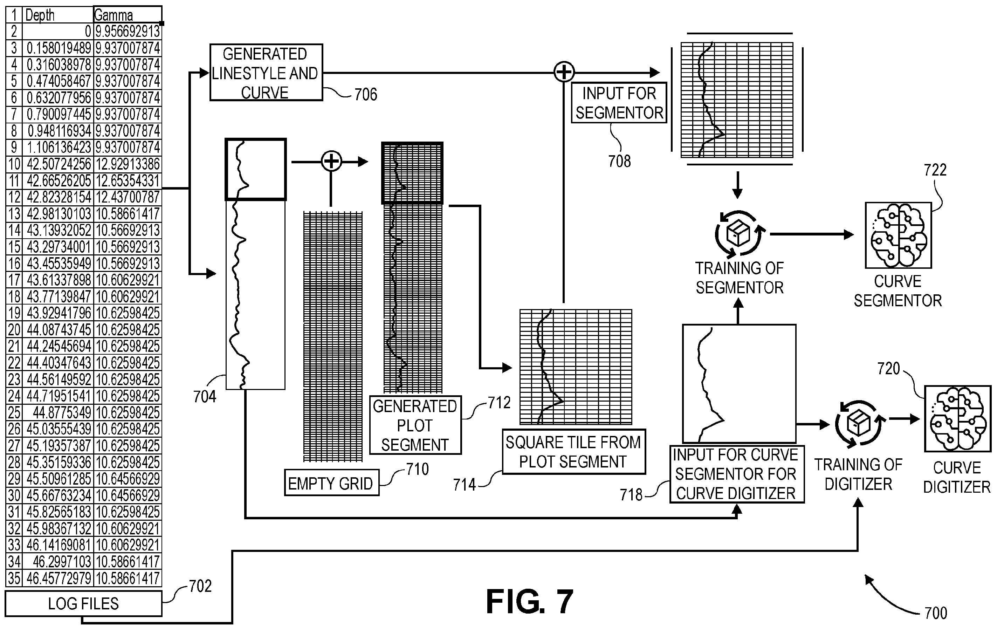

[Saood: Please add any other segmentation models that may be used.] The machine learning digitization system may be constructed using a four-layer convolutional neural network, with a leaky ReLU activation function that is trained as a classification task to convert the curve mask into digital format by classifying each row of the curve mask, by way of non-limiting example. (This process is described in detail in reference to Figs. 6 and 7, for example.)

Detailed descriptions of the above three operations, in reference to the machine learning system, are provided presently.

Fig. 3 schematically illustrates generating 300 a synthetic well log graph 306 for machine learning training according to various embodiments. A non-limiting example implementation for the first conceptual operation, generating synthetic training data, is described in reference to Fig. 3.

In general, training the segmentation and digitization machine learning system uses labeled training data, which can be very difficult to obtain. For example, an embodiment may be trained using about 1000 labeled plot segment tiles, and a naive way of obtaining the same would be to have a person manually trace all the curves one at a time using a digital input device, which can take a significant amount of time. Consequently, some embodiments use synthetic generated training data based on empty grid lines and .las files.

According to a reduction to practice, the inventors obtained publicly available .las files for well logs and used matplotlib to plot the corresponding curves 304. The inventor combined the curves 304 with images of grid lines 302, which were obtained by scanning well log graphs (in regions that did not include curves). According to various embodiments, the scanned grid lines 302 may be incomplete, noisy, and may include extraneous markings or other indicia. In particular, for a synthetic training data instance, the curves 304 generated from a .las coordinate data file were plotted onto a virtual white background, and an empty grid 302 was superimposed to get the final plot segment 306. Because the corresponding .las file included a digital representation of the coordinates of the curve 304, the labels were already available, so there was no need to obtain separate labels. Thus, the synthetic training data was obtained by first acquiring the curve labels, and then plotting the curves and superimposing grid lines.

Fig. 4 schematically illustrates preprocessing, for machine learning training, a synthetic well log graph by annotating it with a line style according to various embodiments. A non-limiting example implementation for the second conceptual operation, preprocessing synthetic training data, is described in reference to Fig. 4.

The synthetic well log graphs as shown and described in reference to Fig. 3 may not be immediately suitable for training. For example, some embodiments train the segmentation machine learning system to detect one curve at a time, and preprocessing the training data may facilitate this feature. Preprocessing may include dividing an entire synthetic plot segment 402 into square tiles 404 with side length equal to the width of the plot segment 402. Then each tile is annotated, e.g., on all four sides, with a line style 406 extracted from a well log header. This allows for specifying the line style of the curve that is to be extracted from the curve. The resulting annotated tiles, e.g., the annotated tile 408, may be paired with the same curve in isolation, as shown and described in reference to Fig. 5, in order to train the segmentation machine learning system.

Fig. 5 illustrates a synthetic machine learning training datum pair 500 that includes curves 504 and combined 502 curves and grid lines according to various embodiments. According to various embodiments, the segmentation machine learning system is trained to accept combined 502 curves and grid lines and output the curves 504 in isolation. The segmentation machine learning system may be trained using training data that includes training data pairs, where each training datum pair 500 includes a curve 504, and a combined 502 curve and grid lines. Both the curve 504 and the combined 502 curve and grid lines may be synthesized as shown and described in reference to Fig. 4. In particular, the combined 502 curve and grid lines may be annotated with a line style, and the curve 504 may include the same annotation. Note that only the curve that has the selected line style as annotated in the combined 502 curve and grid lines is isolated in the curve 504.

Fig. 6 schematically illustrates training a machine learning digitization system to digitize a curve mask 602 according to various embodiments. A non-limiting example implementation for the third conceptual operation, training the machine learning system, is described in reference to Fig. 6. As noted herein, a machine learning system of an embodiment may include two separate machine learning systems: a segmentation machine learning system, and a digitization machine learning system. Fig. 6 schematically illustrates training the digitization machine learning system according to various embodiments.

The segmentation machine learning system outputs a curve mask 602, which is provided as an input to the digitization machine learning system. Accordingly, the digitization machine learning system is trained to convert a curve mask (such as the curve mask 602) into final digital values. Thus, the digitization machine learning system is trained using curve masks and corresponding digitization values. According to some embodiments, the digitization machine learning system is trained using training data pairs, where each training datum pair includes a row of pixels 604 from a curve mask 602 and a corresponding digitization value 606. That is, according to some embodiments, the digitization is handled as a classification problem, where each row of a curve mask image is classified into one class, where each pixel index corresponds to one class. Digitizing the curve masks this way helps to impose a restriction that, at each depth point, there can only be one value of the property measured.

Once trained, the digitization machine learning system may output a respective pixel index for each row in the curve mask image. The pixel indices may then be scaled (e.g., according to a linear equation) to correspond to the scale and range of the curve, as indicated in the well log header.

Fig. 7 schematically illustrates training 700 a machine learning system to digitize a well log curve according to various embodiments. The training 700 illustrated in Fig. 7 includes training both a segmentation machine learning system 722 and training a digitization machine learning system 720.

The training starts with acquiring .las well log files 702, which include coordinate data representing curves. The data extracted from the publicly available .las files is plotted to generate curves 704, e.g., in a solid line style. This process may be performed, e.g., as shown and described herein in reference to Fig. 3. The well log files 702 are also used to generate curves in an artificially generated and randomly selected line style (e.g., solid, dashed, dotted, various colors, etc.) at 706, as well as line style annotations. At 710, a background of grid lines is extracted carefully from a scan of an available well log is selected, and the curve is superimposed on the chosen grid lines to provide a plot segment at 712. This process may be performed, e.g., as shown and described herein in reference to Fig. 3. At 716, a square tile is extracted from the plot segment image. This is rendered with a randomly selected line style and combined with the line style annotations at 708 to form one half of a training datum pair for the machine learning segmentation system 722. This process may be performed, e.g., as shown and described herein in reference to Fig. 4. The other half of such a training datum for the machine learning segmentation system 722 is the corresponding isolated curve tile 716, e.g., rendered using a solid line style. Such a training datum pair is, e.g., shown and described herein in reference to Fig. 5. Before providing the training datum pair to the machine learning segmentation system 722, the tile may be further preprocessed by adding a variety of noise, such as gaussian blur, gaussian noise, and white jitter, and may be subjected to a vertical or horizontal flip to generate additional tiles. The isolated curve tile from 716 may also be used to obtain one half of a training datum for the machine learning digitization system 720. The other half of such a training datum for the machine learning digitization system 720 is taken from the corresponding coordinates from the well log file 702. Such a training datum pair is, e.g., shown and described herein in reference to Fig. 6. Thus, the isolated curve tile 716 is used for both the expected output for segmentation model and to obtain an input for digitization model

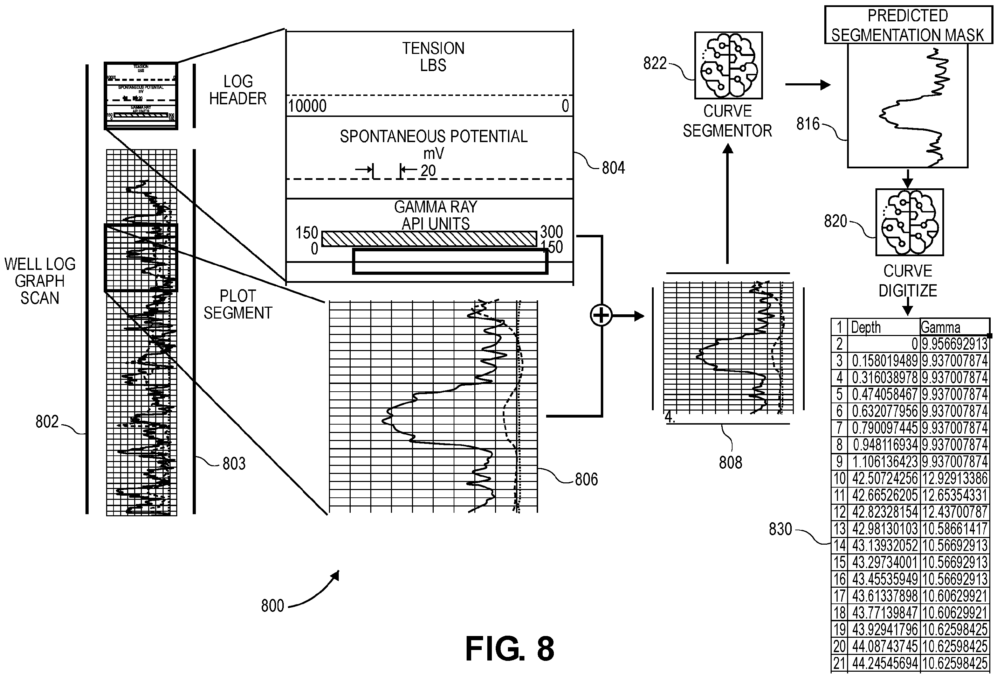

Fig. 8 schematically illustrates using a trained machine learning system 800 to digitize a well log curve according to various embodiments. The high-level process may be as shown and described herein in reference to Fig. 1. The trained machine learning system may be trained as disclosed herein e.g., in reference to Fig. 7.

Initially, a scan of a paper well log graph 802 is obtained. The well log graph 802 includes a plot segment 803 and a well log header 804. The scan may be, e.g., as shown and described herein in reference to Fig. 2. The well log header 804 is extracted to select the line style that corresponds to the information that is to be digitized. A square plot segment tile 806 is extracted from the well log plot segment 803. The square plot segment tile 806 is then annotated with the selected line style, e.g., as shown and described herein in reference to Fig. 4, to produce an annotated square plot segment tile 808. The annotated square plot segment tile 808 is passed to the trained segmentation machine learning system 822 as an input. The trained segmentation machine learning system 822 provides an isolated curve in the form of a curve mask 816 as an output. The curve mask 816 is then passed to the trained digitization machine learning system 820 as an input. The trained digitization machine learning system 820 provides a digitization 830 of the curve mask, representing the curve from the square plot segment tile 806 with the selected line style, as an output. The digitization 830 may be in the form of a file with a set of coordinates representing the curve, e.g., in .csv or .las format. The entire plot segment 803 may be divided into square plot segment tiles and process may be repeated for each such tile, and the respective digitizations may be combined to obtain a digitization of the entire plot segment 803.

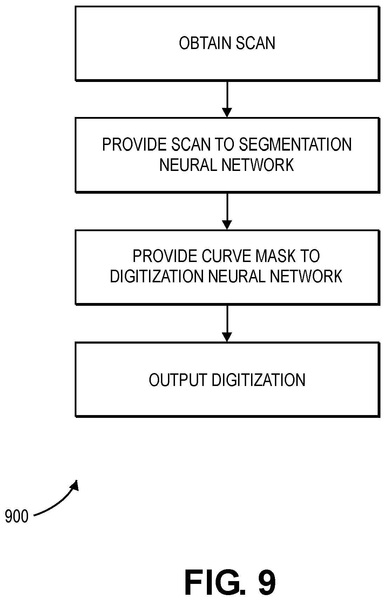

Fig. 9 is a flow diagram for a machine learning method 900 of digitizing a well log curve according to various embodiments. The method 900 may be implemented using a machine learning system trained as shown and described herein in reference to Fig. 7. Thus, the method 900 may be implemented as shown and described herein in reference to Fig. 8.

At 902, the method 900 includes obtaining a scan of a well log curve paper document. The actions of 902 may be as shown and described in reference to Figs. 2 and 8, for example.

At 904, the method 900 includes providing the scan of the well log curve paper document to a trained segmentation neural network, wherein a curve mask is obtained. The actions of 904 may be as shown and described in reference to Fig. 8, for example, and the segmentation neural network may be trained as shown and described in reference to Fig. 7, for example.

At 906, the method 900 includes providing the curve mask to a trained digitization neural network, wherein a digitization of the curve mask is obtained. The actions of 906 may be as shown and described in reference to Fig. 8, for example.

At 908, the method 900 includes outputting the digitization of the curve mask. The actions of 908 may be as shown and described in reference to Fig. 8, for example. The digitization may be output to a user, e.g., displayed on a computer monitor, or output to a computer system. According to some embodiments, the digitization is output to a drilling process of a drilling system, and a drilling operation is performed by the drilling system based on the digitization.

Certain examples can be performed using a computer program or set of programs. The computer programs can exist in a variety of forms both active and inactive. For example, the computer programs can exist as software program(s) comprised of program instructions in source code, object code, executable code or other formats; firmware program(s), or hardware description language (HDL) files. Any of the above can be embodied on a transitory or non-transitory computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), flash memory, and magnetic or optical disks or tapes.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented using computer readable program instructions that are executed by an electronic processor.

These computer readable program instructions may be provided to a processor of a general-purpose computer, special purpose computer, or other programmable data processing apparatus to produce a machine, such that the instructions, which execute via the electronic processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

In embodiments, the computer readable program instructions may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the C programming language or similar programming languages. The computer readable program instructions may execute entirely on a user's computer, partly on the user's computer, as a stand-alone software package, partly on the user's computer and partly on a remote computer or entirely on the remote computer or server.

As used herein, the terms "A or B" and "A and/or B" are intended to encompass A, B, or {A and B}. Further, the terms "A, B, or C" and "A, B, and/or C" are intended to encompass single items, pairs of items, or all items, that is, all of: A, B, C, {A and B}, {A and C}, {B and C}, and {A and B and C}. The term "or" as used herein means "and/or."

As used herein, language such as "at least one of X, Y, and Z," "at least one of X, Y, or Z," "at least one or more of X, Y, and Z," "at least one or more of X, Y, or Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. § 112(f). However, for any claims containing elements designated in any other manner, it is intended that such elements are not to be interpreted under 35 U.S.C. § 112(f).

While the invention has been described with reference to the exemplary examples thereof, those skilled in the art will be able to make various modifications to the described examples without departing from the true spirit and scope. The terms and descriptions used herein are set forth by way of illustration only and are not meant as limitations. In particular, although the method has been described by examples, the steps of the method can be performed in a different order than illustrated or simultaneously. Those skilled in the art will recognize that these and other variations are possible within the spirit and scope as defined in the following claims and their equivalents.

## Claims

1. A machine learning method of digitizing a well log curve, the method comprising:
obtaining a scan of a well log curve paper document;
providing the scan of the well log curve paper document to a trained segmentation neural network, wherein a curve mask is obtained;
providing the curve mask to a trained digitization neural network, wherein a digitization of the curve mask is obtained; and
outputting the digitization of the curve mask.

2. The method of claim 1, wherein the outputting comprises outputting to a drilling process.

3. The method of claim 2, further comprising performing a drilling operation based on the digitization of the curve mask.

4. The method of any of the preceding claims, wherein at least one of the trained segmentation neural network or the trained digitization neural network is trained using synthetic training data, wherein the synthetic training data is generated from numerical coordinate data.

5. The method of claim 4,
wherein the trained segmentation neural network is trained using the synthetic training data,
wherein each synthetic training datum comprises a respective pair,
wherein each respective pair comprises an image of a respective curve generated from respective numerical coordinate data and the image of the respective curve generated from respective numerical coordinate data combined with a respective grid depiction, and
wherein the trained segmentation neural network is trained to remove a grid from the scan of the well log curve paper document.

6. The method of claim 4 or 5,
wherein the trained digitization neural network is trained using the synthetic training data,
wherein each synthetic training datum comprises a respective pair, and
wherein each respective pair comprises a section of an image of a respective curve generated from respective numerical coordinate data and a corresponding respective numerical position value.

7. The method of any of the claims 4-6, wherein both of the trained segmentation neural network and the trained digitization neural network are trained using the synthetic training data.

8. The method of any of the preceding claims, wherein the scan of the well log curve paper document comprises a plurality of different curves, and wherein the trained segmentation neural network is trained to produce the curve mask for a selected line style.

9. The method of claim 8, further comprising annotating the scan of the well log curve paper document with the selected line style prior to the providing the scan of the well log curve paper document to the trained segmentation neural network.

10. The method of any of the preceding claims,
wherein the providing the scan of the well log curve paper document to the trained segmentation neural network comprises dividing the scan of the well log curve paper document into a plurality of scan tiles and providing the scan tiles individually to the trained segmentation neural network, wherein the curve mask comprises a plurality of curve mask tiles, and
wherein the providing the curve mask to the trained digitization neural network comprises providing the curve mask tiles individually to the trained digitization neural network, wherein the digitization of the curve mask comprises a plurality of digitizations of the curve mask tiles.

11. A non-transitory computer-readable medium comprising instructions that, when executed by an electronic processor, configure the electronic processor to perform the steps of the method of any of the preceding claims.

12. A system comprising an electronic processor and a non-transitory computer-readable medium comprising instructions that, when executed by the electronic processor, configure the electronic processor to perform the steps of the method of any of the claims 1 - 10.
